Europäisches Patentamt

European Patent Office

Office européen des brevets

(19)

(11) **EP 1 187 460 A2**

(12) **EUROPEAN PATENT APPLICATION**

(43) Date of publication:
**13.03.2002 Bulletin 2002/11**

(51) Int Cl.$^7$: **H04N 1/42**

(21) Application number: **01307364.8**

(22) Date of filing: **30.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.08.2000 JP 2000264384**

(71) Applicant: **Kabushiki Kaisha Toshiba**
**Tokyo 105-8001 (JP)**

(72) Inventors:
 • **Nagai, Takeshi, c/o Int. Property Division**
 **Tokyo 105-8001 (JP)**
 • **Kikuchi, Yoshihiro, c/o Int. Property Division**
 **Tokyo 105-8001 (JP)**
 • **Masuda, Tadaaki, c/o Int. Property Division**
 **Tokyo 105-8001 (JP)**

(74) Representative: **Midgley, Jonathan Lee**
**Marks & Clerk**
**57-60 Lincoln's Inn Fields**
**GB-London WC2A 3LS (GB)**

(54) **Image transmitting method and apparatus and image receiving method and apparatus**

(57) An image data transmitting apparatus comprises an encoder (102) which encodes input image data, and a transmitter (107) which packetizes encoded data output from the encoder (102) and transmits data packets. The transmitter (107) comprises a delay device (105) which controls a transmission timing of each of the data packets thereby to transmit the data packets at intervals longer that a predetermined value.

FIG.1

EP 1 187 460 A2

## Description

The present invention relates to an image transmitting/receiving method and apparatus. More particularly, the present invention relates to an image transmitting/receiving method and apparatus adapted to transmit coded moving picture and/or still picture images by way of a wired communication network such as ISDN or Internet or a radio communication network such as one involving a PHS and/or a communication satellite.

The technological developments in the field of digital coding and broad band networks have been remarkable in recent years particularly for information of various types including images and efforts are being paid for developing applications utilizing such technologies. Systems have been and are being developed for transmitting compressed and coded images by way of a communication network.

Particularly, a large number of applications have been made available in recent years for transmitting/ receiving packetized data as due to ever-spreading internet and intranet systems. Packetization is a very effective way for sharing the band of a communication channel by a plurality of users. Protocols for transmitting/receiving packetized data by way of an internet or an intranet include TCP/IP and UDP/IP. TCP/IP is affected little by errors because it incorporates frameworks for retransmissions so that it is effective for down-load type applications for which data are expected to be received accurately and reliably although it is a little bit time-consuming. On the other hand, UDP/IP does not have any framework for retransmission incorporated therein but is free from any delay attributable to a retransmission and hence effective for applications that are required to operate on a real time basis.

An ordinary transmission of moving picture images involves a huge volume of image data and hence the bandwidth of a network is often not sufficient for the data. Then, the image data are coded to reduce the volume of data to be transmitted before transmission. Currently available techniques for compressing and coding moving picture image data include motion compensation, discrete cosine transform (DCT), sub-band coding, pyramid coding and variable-length coding and combinations of any of them. International standards for encoding moving pictures include ISO MPEG-1 and MPEG-2 and ITU-T H. 261, H. 262 and H. 263. International standards for multiplexing code strings and other data obtained by compressing video and/or audio signals include ISO MPEG System and ITU-T H. 221 and H. 223.

Conventionally, when transmitting moving picture image data by way of an internet or intranet system, the image data output from an image input device are encoded by an encoder and then transformed into an encoded data adapted to the band of the network to be used for transmitting the data. The coded data are then transmitted to a specified receiver by an encoded data transmitting device. The encoder is required to encode the data into data adapted to the band of the network to be used for transmission. Normally, the frame rate of moving picture image data is 29.97fps in the case of NTSC and 25fps in the case of PAL. However, it is difficult to provide an effective image quality with the bandwidth of an ordinary network system such as an internet or intranet system when such a frame rate is used with a known coding system. Therefore, not all the frames are encoded but they are sampled and encoded to suppress the volume of encoded data.

However, with such a technique of sampling frames and then encoding data, the encoded data are output from the encoder not at uniformly arranged output timings but at timings that are arranged very unevenly. Then, if the encoded data transmitting device transmits the data to the receiving device without modifying them, the data may not be received correctly because the data is partly expanded beyond the bandwidth although the data are confined within the bandwidth as a whole. Therefore, conventionally, a buffer is used to control and smooth the transmission rate so that the data may not be transmitted at a rate beyond the limit of the bandwidth if partly.

The control operation using the buffer is such that the encoded data output form the encoder is divided into packets with a given length by a packetizing device and then temporarily stored in the buffer. The transmitter sequentially takes out the data packets from the buffer so that the data may not be transmitted at a rate exceeding the limit of the bandwidth.

However, when the control operation is conducted by using the buffer to suppress the rate of transmitting data below the limit of the bandwidth and the rate at which data are transmitted from the transmitter goes under the rate at which data are output from the encoder, the buffer can quickly become full of data and can even overflow. Conventionally, when the buffer is full, the encoder temporarily stops the encoding operation and restarts the operation only when the buffer comes to have a free storage area as a result of the data transmission of the transmitter in order to avoid the problem of overflow.

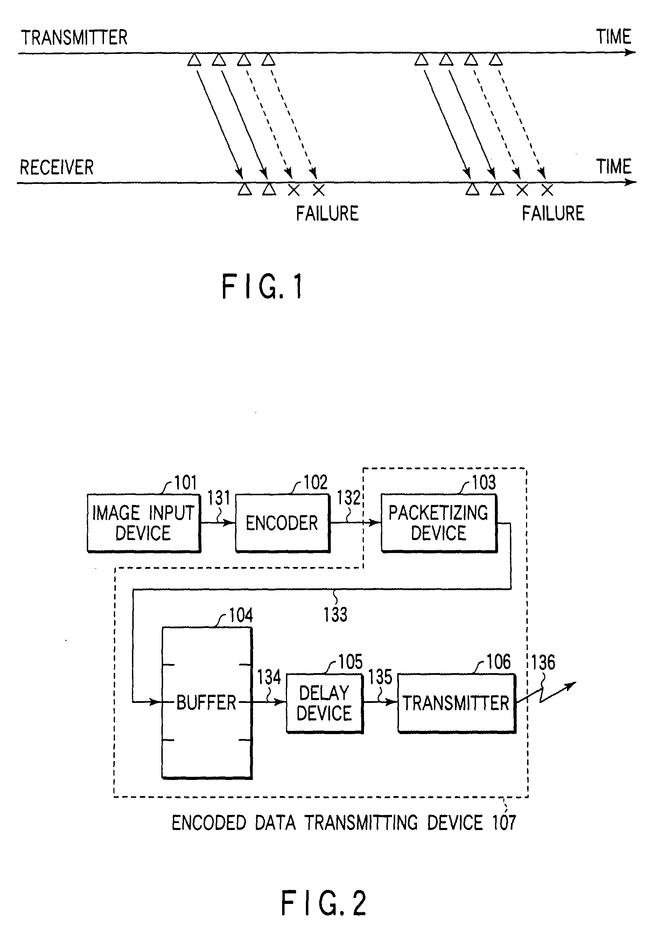

However, with such a control operation using the buffer, the intervals of transmitting packets can vary. In other words, there can be times when packets are transmitted with small intervals. Then, the buffer at the receiving side or the one at the router of the network between the transmitter and the receiver can overflow to lose data if the total volume of the data being transmitted is small and the bandwidth of the network is sufficiently large relative to the data being transmitted, as shown in FIG. 1.

Additionally, the problem of overflow that may end up with a loss of data can be avoided by temporarily stopping the operation of the encoder. However, then the buffer will almost always be full and the encoder will be not able to operate on a stable basis because its operation needs to be stopped and restarted frequently. This means that the frames are sampled in such a way that the intervals separating the frames always vary and the user may feel uncomfortable when he or she views the transmitted image. Still additionally, the data stored in the buffer can stay there for a considerable period of time and it will take a long time before the taken image gets to the receiving side. This is a vital problem to real time communications.

The present invention is directed to method and apparatus that substantially obviates one or more of the problems due to limitations and disadvantages of the related art.

According to one aspect of the present invention, an image data transmitting apparatus comprising:

an encoder configured to encode input image data; and

transmitter configured to packetize encoded data output from the encoder and transmit data packets, the transmitter comprising a delay device configured to control a transmission timing of each of the data packets thereby to transmit the data packets at intervals longer that a predetermined value.

According to another aspect of the present invention, an image data receiving apparatus comprising:

a receiver configured to receive encoded image data;

a storage configured to store the encoded image data received by the receiver;

a decoder configured to decode the encoded image data stored in the storage; and

a controller configured to vary priorities of operations of the receiver and the decoder according to a volume of the image data stored in the storage.

According to still another aspect of the present invention, an image data transmitting method comprising:

encoding input image data; and

packetizing encoded data and transmitting data packets, a transmission timing of each of the data packets being controlled thereby transmitting the data packets at intervals longer that a predetermined value.

According to still further aspect of the present invention, an image data receiving method comprising:

receiving encoded image data;

storing the received image data in storing means;

decoding the stored image data; and

varying priorities of operations of the receiving and the decoding according to a volume of the stored image data.

According to the above aspects of the present invention, it is possible to reduce the loss of data at the receiving side when data packets are transmitted at intervals, each of which is not shorter than a predetermined period of time. The entire system can be operated efficiently by suitably assigning priorities to various processing operations. It is possible to reduce the use of the memory capacity of the system.

This summary of the invention does not necessarily describe all necessary features so that the invention may also be a sub-combination of these described features.

The invention can be more fully under stood from the following detailed description when taken in conjunction with the accompanying drawings, in which:

FIG. 1 is a schematic illustration of some of the disadvantages of a known packet transmission system;

FIG. 2 is a schematic block diagram of the first embodiment of an image data transmitting apparatus according to the present invention;

FIG. 3 is a schematic block diagram of the delay device of the first embodiment;

FIG. 4 is a schematic illustration of intervals separating packets to be transmitted by the first embodiment as compared with those separating packets to be transmitted by a known image data transmitting apparatus;

FIG. 5 is a schematic illustration of the data processing operation of the first embodiment;

FIG. 6 is a schematic illustration of the data processing operation of a known image data transmitting apparatus;

FIG. 7 is another schematic illustration of the data processing operation of the first embodiment;

FIG. 8 is a schematic block diagram of an encoded data transmitting device obtained by modifying that of the first embodiment;

FIG. 9 is a schematic block diagram of another encoded data transmitting device also obtained by modifying that of the first embodiment;

FIG. 10 is a schematic block diagram of still another encoded data transmitting device also obtained by modifying that of the first embodiment;

FIG. 11 is a schematic block diagram of still another encoded data transmitting device also obtained by modifying that of the first embodiment;

FIG. 12 is a schematic block diagram of the second embodiment of an image data transmitting apparatus according to the present invention;

FIG. 13 is a flow chart of a first technique that can be used for assigning priorities in the image data transmitting device of the second embodiment;

FIG. 14 is a flow chart of a second technique that can be used for assigning priorities in the second embodiment;

FIG. 15 is a flow chart of a third technique that can be used for assigning priorities in the second embodiment;

FIG. 16 is schematic block diagram of an image data receiving apparatus to which the technique of assigning priorities of the second embodiment is applied;

FIG. 17 is a schematic block diagram of the encoded data receiving device of the image data receiving apparatus of FIG. 16;

FIG. 18 is a flow chart of a first technique that can be used for assigning priorities of the second embodiment of the image data receiving apparatus according to the present invention;

FIG. 19 is a flow chart of a second technique that can be used for assigning priorities in the second embodiment;

FIG. 20 is a flow chart of a third technique that can be used for assigning priorities in the second embodiment;

FIG. 21 is a schematic block diagram of the third embodiment of image data transmitting apparatus according to the present invention;

FIG. 22 is a schematic block diagram of the buffer of the third embodiment;

FIG. 23 is a schematic block diagram of an image data receiving apparatus to which the buffer size assigning method of the third embodiment is applied;

FIG. 24 is a schematic block diagram of the buffer of the image data receiving apparatus of FIG. 23; and

FIG. 25 is a schematic block diagram of an image data receiving apparatus realized by modifying the third embodiment.

An embodiment of an image data transmitting/ receiving method or apparatus according to the present invention will now be described with reference to the accompanying drawings.

First Embodiment

FIG. 2 is a schematic block diagram of the first embodiment of an image data transmitting apparatus according to the present invention, illustrating its basic configuration. This image data transmitting apparatus is adapted to encode input image data and transmit the coded image data by way of a wired or radio communication network. As shown in FIG. 2, it comprises an image input device 101, an encoder 102, a packetizing device 103, a buffer 104, a delay device 105 and a transmitter 106.

Image data 131 of a moving picture image and/ or still image input to the image input device 101 that may be a scanner is encoded by the encoder 102. Encoded data 132 produced by the encoder 102 is then input to the packetizing device 103. The packetizing device 103 packetizes the encoded data 132 according to a predetermined method, adding header information thereto. Data packet 133 produced from the packetizing device 103 is then input to the buffer 104 and temporarily stored there.

The data packet 134 output from the buffer 104 is then input to the delay device 105 and delayed by a period of time determined by the delay device 105. The data packet 135 delayed by the delay device 105 is then input to the transmitter 106 and transmitted by the latter to the receiving side as transmission data 136 by way of a wired or radio communication network. The packetizing device 103, the buffer 104, the delay device 105, the transmitter 106 may be referred to collectively as encoded data transmitting device 107 hereinafter. In other words, the encoded data transmitting device 107 packetizes encoded data and transmits data packet at intervals longer than at least a predetermined time period by delaying the timing of transmitting each data packet by means of the delay device 105.

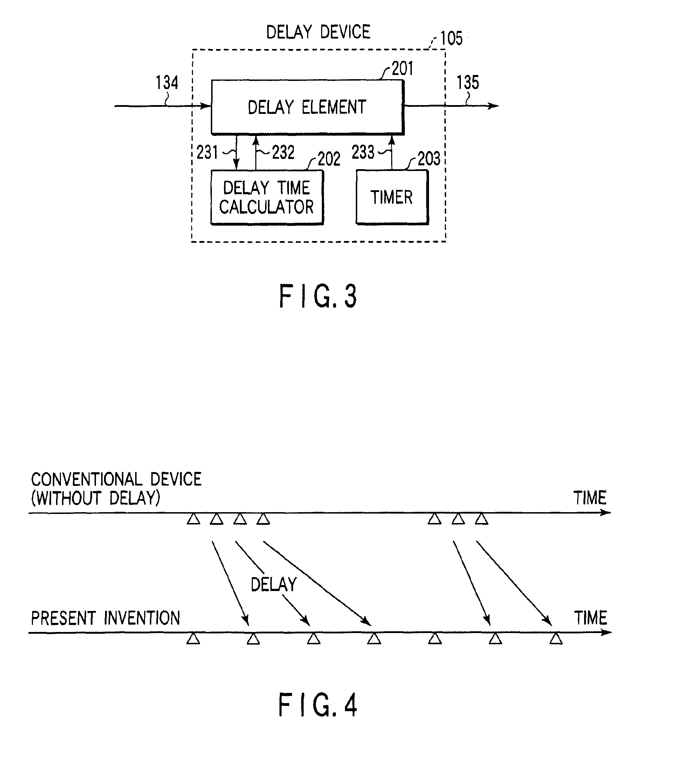

FIG. 3 is a detailed block diagram of the delay device 105.

Referring to FIG. 3, the delay device 105 comprises a delay element 201, a delay time calculator 202 and a timer 203. The data packet 134 output from the buffer 104 is input to the delay element 201. The delay element 201 notifies the delay timer calculator 202 of information 231 on the configuration of the data packet including the data size and time-related information on the data packet. The delay time calculator 202 calculates the delay time of each input packet on the basis of the information 231 on the configuration of the data packet notified by the delay element 201 and notifies the delay element 201 of the outcome of the calculation as delay time 232. The delay element 201 may temporarily suspend the output of the data packet 135 to the transmitter 106 on the basis of the delay time 232 notified by the delay time calculator 202.

The delay time calculator 202 calculates the delay time on the basis of the size of the data packet, the bandwidth of the network that is already given as specified value and the minimal transmission interval t.

If the size of the data packet is N (bytes), the bandwidth of the network (transmission rate) is R (bps), T (msec) as defined by equation (1) is obtained as a result of the calculation on the transmission delay time (the interval from the transmission of the immediately preceding packet) for each packet;

$$T \text{ (msec)} = ((N \times 8)/R) \times 1000 \qquad (1)$$

where T = t, if $((N \times 8) / R) \times 1000$ is not greater than t.

In the above description, t refers to the minimal transmission interval (msec) of data packet that is specific to the system.

By setting T = $((N \times 8)/R) \times 1000$, it is possible to provide data transmission intervals adapted to the bandwidth of the transmission network. By setting T = t, it is possible to provide data transmission intervals adapted to the processing rate of the receiving side.

Thus, the minimal delay time t is ensured for the transmission intervals of successive packets so that packets may not be transmitted in succession even when the bandwidth of the network is very large and hence the value of $((N \times 8) / R)$ is very close to 0 so that data may be transmitted on a stable basis to the receiving side. More specifically, the delay time T (msec) is made equal to $(N \times 8 / R) \times 100$ when the value of $(N \times 8 / R) \times 1000$ is not smaller than the minimal delay time t, whereas it is made equal to the minimal delay time t when the value of $(N \times 8 / R) \times 1000$ is smaller than the minimal delay time t.

Additionally, it is possible to know the actual bandwidth of the network, utilizing a protocol such as RTP (Real-time Transport Protocol) or RTCP (Real-Time Control Protocol) without using the value specified for the bandwidth of the network. It is also possible to control the delay time by dynamically changing the value of R on the basis of the obtained value of the bandwidth so that it may correctly reflect the current status of the network.

FIG. 4 is a schematic illustration of intervals separating data packets to be transmitted by the first embodiment of image data transmitting apparatus according to the present invention as compared with those separating data packets to be transmitted by a known image data transmitting apparatus. As seen from FIG. 4, the packet transmission intervals of a known image data transmitting apparatus can vary remarkably and a data packet may be lost when intervals are very small. With this embodiment, on the other hand, the data packets stored in the buffer 104 are not transmitted successively without any delay. Rather, they are transmitted with the minimal delay time of t for transmission intervals under the control of the delay device 105 so that the packet transmission intervals are considerably uniform and hence no packet loss may occur at the receiving side when the data packets are transmitted in succession at short transmission intervals. Thus, the operation of transmitting data packets proceeds on a stable basis.

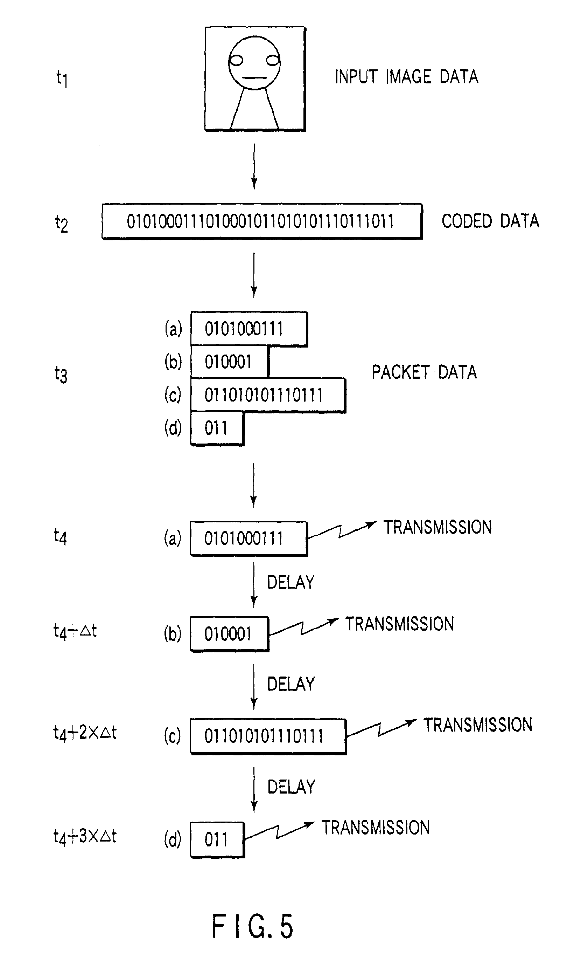

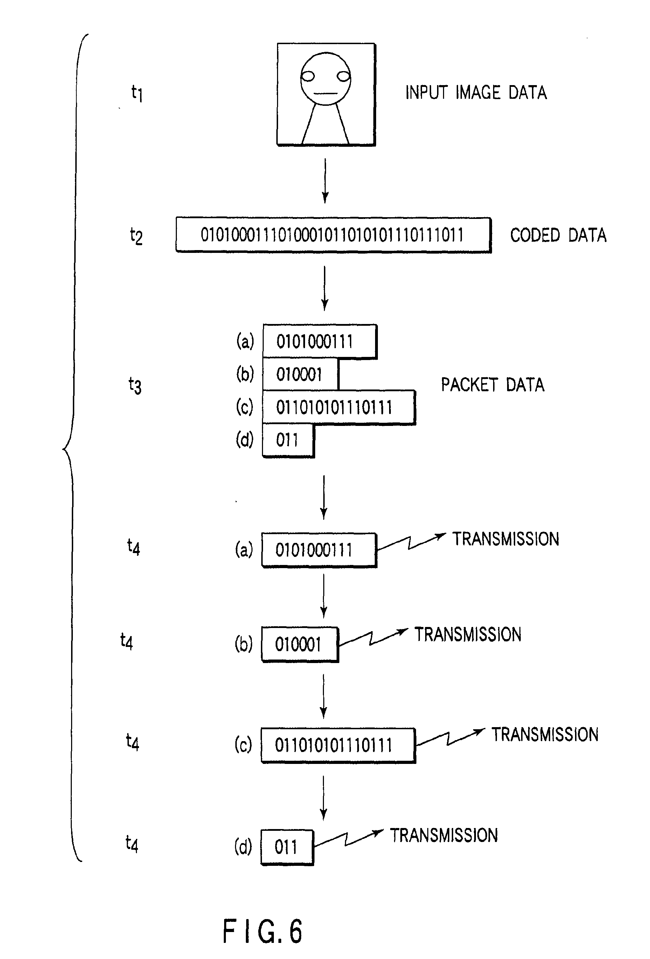

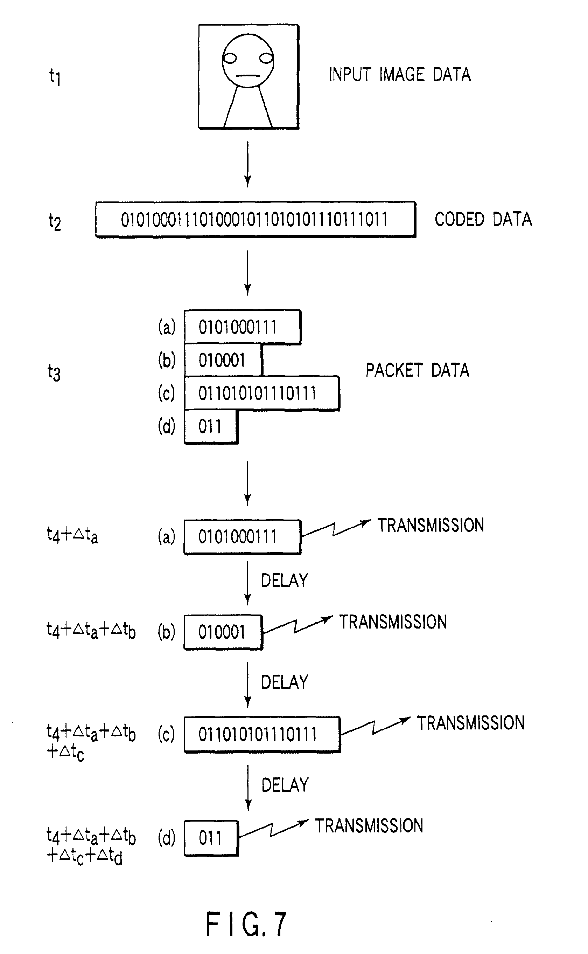

FIG. 5 is a schematic illustration of the data processing operation of the first embodiment of the image data transmitting apparatus according to the present invention. With this embodiment, data packets are transmitted at regular intervals showing a fixed value so that packets may not be sent out in a congested manner. It will be appreciated by seeing FIG. 5 that packets (a) through (d) containing encoded data are sent out successively in such a way that each succeeding packet is transmitted after the immediately preceding packet with packet transmission interval $\Delta t$ separating the two transmissions. FIG. 6 is a schematic illustration of the data processing operation of a known image data transmitting apparatus. As seen from FIG. 6, data packets (a) through (d) are transmitted continuously without any intervals and hence without any delay. FIG. 7 is another schematic illustration of the data processing operation of the first embodiment of image data transmitting apparatus according to the present invention, where packet transmission intervals are controlled appropriately. As seen from FIG. 7, optimal values are selected respectively for packet transmission intervals $\Delta t_a$, $\Delta t_b$, $\Delta t_c$ and $\Delta t_d$ depending on the data size of each of the packets (a) through (d). The arrangement of FIG. 5 may be understood as particular solution when the value of R in equation (1) is infinite so that it may be appreciated that the arrangement of FIG. 5 is within the scope of the first embodiment.

By using this embodiment, it is possible to provide data transmission intervals adapted to both the bandwidth of the transmission network and the processing rate of the receiving side. Thus, as a result, it is possible to eliminate the problem of loss of data and data errors due to the bandwidth of the network and the processing rate of the receiving side. Then, any possible degradation of the quality of the image reproduced at the receiving side can be effectively avoided.

Modification to First Embodiment

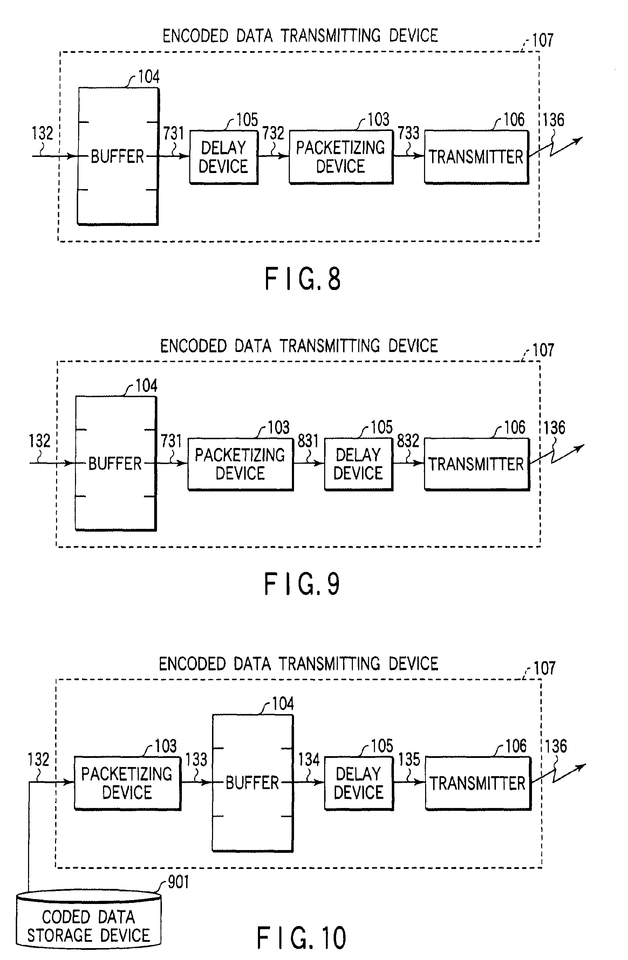

The arrangement of the packetizing device 103, buffer 104 and delay element 105 of FIG. 2 may be modified appropriately. For example, it may alternatively so arranged that the encoded data 132 output from the encoder 102 is temporarily stored in the buffer 104 and then input to the packetizing device 103 by way of the delay device 105 before output to the transmitter 106 as shown in FIG. 8. The effect of this modified arrangement is same as that of the arrangement of FIG. 2.

FIG. 9 shows another modified arrangement where the output of the buffer 104 is input to the packetizing device 103 and then output to the transmitter 106 by way of the delay device 105.

With any of the arrangements of FIGS. 2, 8 and 9, the buffer 104 stores encoded data.

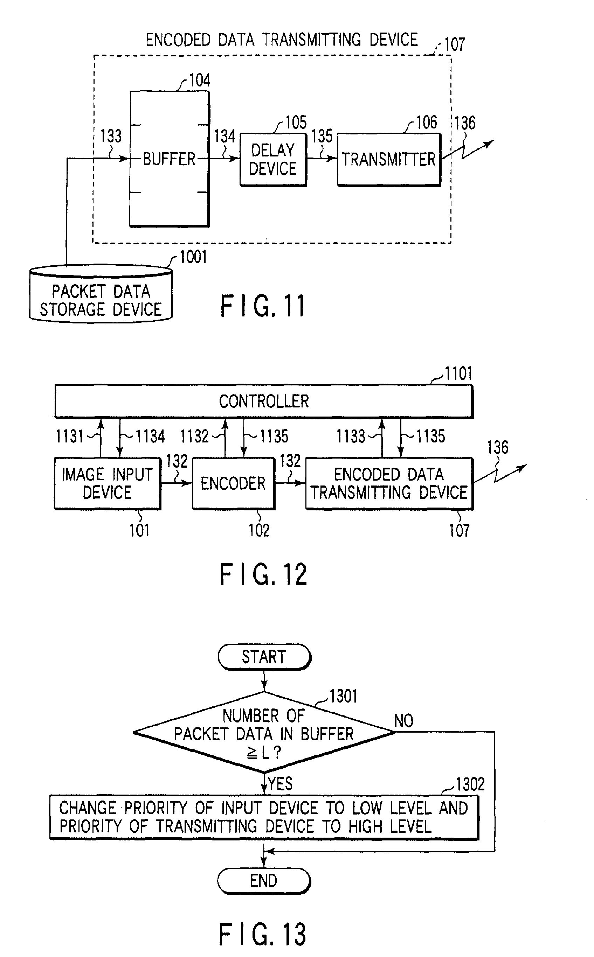

FIG. 10 is a schematic block diagram of still another encoded data transmitting device 107 also obtained by modifying that of the first embodiment of image data transmitting apparatus according to the present invention. With this modified arrangement, encoded data is stored in an encoded data storage device 901 and then input to the packetizing device 103 which is same as that of the embodiment of FIG. 1. Then, the input data is stored in the buffer 104 and then delayed by the delay device 105 before being transmitted from the transmitter 106. While encoded data is stored in the storage device 901 in this modified arrangement, it may alternatively be packetized to begin with and the obtained data packet may be stored in a packet data storage device 1001 before it is transmitted by way of the buffer 104, delay device 105 and transmitter 106 as shown in FIG. 11.

Other embodiments of the image data transmitting/ receiving method or apparatus according to the present invention will be described. The same portions as those of the first embodiment will be indicated in the same reference numerals and their detailed description will be omitted.

Second Embodiment

FIG. 12 is a schematic block diagram of the second embodiment of image data transmitting apparatus according to the present invention.

The image data 131 input to the image input device 101 is encoded by the encoder 102. The encoded data 132 produced by the encoder 102 is then input to the encoded data transmitting device 107 (see FIG. 2 for details). The encoded data transmitting device 107 transmits the input encoded data 132 to the receiving side. The image input device 101, encoder 102 and encoded data transmitting device 107 input respective pieces of load information 1131, 1132, 1133 showing the quantities of data they respectively process to a controller 1101. The controller 1101 determines the respective priorities of the image input device 101, encoder 102 and encoded data transmitting device 107 on the basis of the pieces of load information 1131, 1132, 1133 input respectively from the image input device 101, encoder 102 and encoded image transmitting device 107.

The respective pieces of priority information 1134, 1135, 1136 of the image input device 101, encoder 102 and encoded data transmitting device 107 as determined by the controller 1101 are then output respectively to the image input device 101, encoder 102 and encoded data transmitting device 107. Then, the image input device 101, encoder 102 and encoded data transmitting device 107 operate according to the respective pieces of priority information 1134, 1135, 1136 input to them.

Now, a technique of determining (assigning) priorities that can be used by the controller 1101 will be described below. While any technique may be used for assigning priorities, an exemplification one will be discussed below.

Firstly, the same priority is given to all of the image input device 101, encoder 102 and encoded data transmitting device 107 to start an operation. Assume that the frame rate (fps) of the input image is used as load information 1131 of the image input device 101 and the frame rate (fps) of the image to be encoded is used as load information 1132 of the encoder 102, while the volume of data (the number of packets) stored in the buffer 104 is used as load information 1133 of the encoded data transmitting device 107.

Note, however, that it is safe to say that the load information 1131 and the priority 1134 of the image input device 101 are used to control both the image input device 101 and the encoder 102 because the frame rate of the encoder 102 follows that of the image input device 101. Therefore, the process of assigning priorities to the image input device 101 and the encoded data transmitting device 107 will be described below.

Delay causes a serious problem in real time transmission. Therefore, it is desirable that data is not accumulated in the buffer 104 to a large extent. Therefore, the priority will be changed to reduce the volume of data stored in the buffer 104 when the number of packets stored in the buffer 104 of the encoded data transmitting device 107 exceeds a predetermined level. FIG. 13 is a basic flow chart of this technique of assigning priorities in the second embodiment.

Referring to FIG. 13, firstly in step 1301, it is determined whether the number of packets stored in the buffer 104 exceeds a predetermined value L or not. If it exceeds the value of L, a higher priority is given to the encoded data transmitting device 107 while a lower priority is given to the image input device 101 in step S1302 so that the volume of data to be written in the buffer 104 of the encoded data transmitting device 107 is reduced while the volume of data to be read out from the buffer 104 is increased in order to make buffer 104 store less data. If, on the other hand, the number of packets stored in the buffer 104 does not exceeds the value of L, the priorities are not changed (and held to the initial values). Therefore, in a system where it is not known which operating section has which priority, this control technique can advantageously be used to assign suitable priorities to the related operating sections.

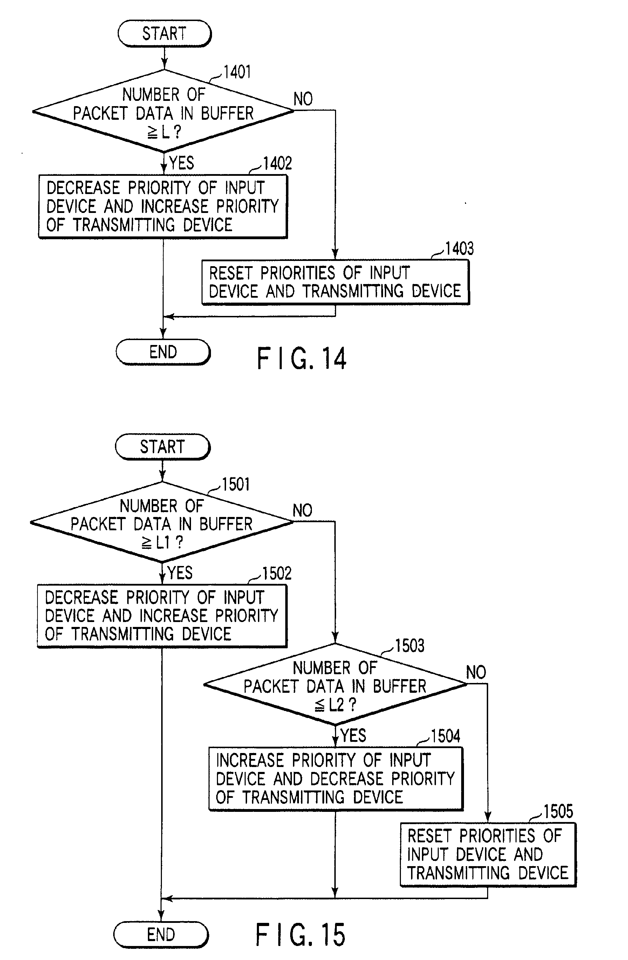

FIG. 14 is a flow chart of a second control technique that can be used for assigning priorities in the second embodiment which comprises a step for resetting the changed priorities to the initial values. Referring to FIG. 14, firstly in step 1401, it is determined whether the number of packets stored in the buffer 104 exceeds the predetermined value L or not. If it exceeds the value of L, the priority of the encoded data transmitting device 107 is raised by a predetermined degree while that of the image input device 101 is lowered by the predetermined degree in step 1402. If, on the other hand, the number of packets stored in the buffer 104 does not exceeds the value of L, the priority of the encoded data transmitting device 107 and that of the image input device 101 are reset to the respective initial values, which are equal to each other, in step 1403.

With this technique, it is possible to reduce the volume of data stored in the buffer 104 by raising the priority of the encoded data transmitting device 107 when the buffer 104 stores too much data. When the buffer 104 has much room for storing data, the frame rate may be raised to improve the image quality. This technique can effectively be used to a system where the load is not constant but varying if the processing operation of FIG. 14 is carried out periodically.

FIG. 15 is a flow chart of a third control technique that is obtained by modifying the second control technique of FIG. 14. This control technique of FIG. 14 is designed so as to make the buffer 104 not to store too much data and hence the priority of the image input device 101 not to go above the initial value. Therefore, with this control technique, the frame rate of the image input section 101 is not raised even if the buffer 104 has much room for storing data. With the control technique of FIG. 15, on the other hand, the priority of the image input device 101 will be raised from the initial value if the volume of data stored in the buffer 104 falls under a reference level.

Referring to FIG. 15, firstly in step 1501, it is determined whether the number of packets stored in the buffer 104 exceeds a predetermined value L1 or not. If it is determined that the number of packets stored in the buffer 104 exceeds the predetermined value L1, the priority of the encoded data transmitting device 107 is raised while that of the image input device 101 is lowered in step 1502. In, on the other hand, it is determined that the number of packets stored in the buffer 104 does not exceeds the predetermined level L1, the control operation proceeds to step 1503, where it is determined whether the number of packets stored in the buffer 104 is not greater than L2 (L2 $\leqq$ L1) or not. If it is not greater than L2, it is so judged that the buffer 104 has now room and then, in step 1504, the priority of the encoded data transmitting device 107 is lowered while that of the image input device 101 is raised. If, on the other hand, the number of packets stored in the buffer 104 is greater than L2, it is so judged that the buffer 104 does not have much room so that the priority of the encoded data transmitting device 107 and that of the image input device 101 are reset to the respective initial values, which are equal to each other, in step 1505.

Thus, the priorities assigned to the image input device 101, encoder 102 and encoded data transmitting device 107 for carrying out the respective processing operations are controlled according to the volume of data stored in the buffer 104 so that processing operations may be carried out in a well-balanced manner. Therefore, the frames are sampled for encoding at a substantial equal interval and the buffer 104 is prevented from storing too much data so that the performance of the transmitter for transmitting images on a real time basis can be greatly improved.

When the rate of processing operation of each of the image input device 101, encoder 102 and encoded data transmitting device 107 is variable or when the system is realized on the basis of a microprocessor or by means of a computer program, the priority of the processing operation of each of the image input device 101, encoder 102 and encoded data transmitting device 107 can be controlled by appropriately allocating resources to them.

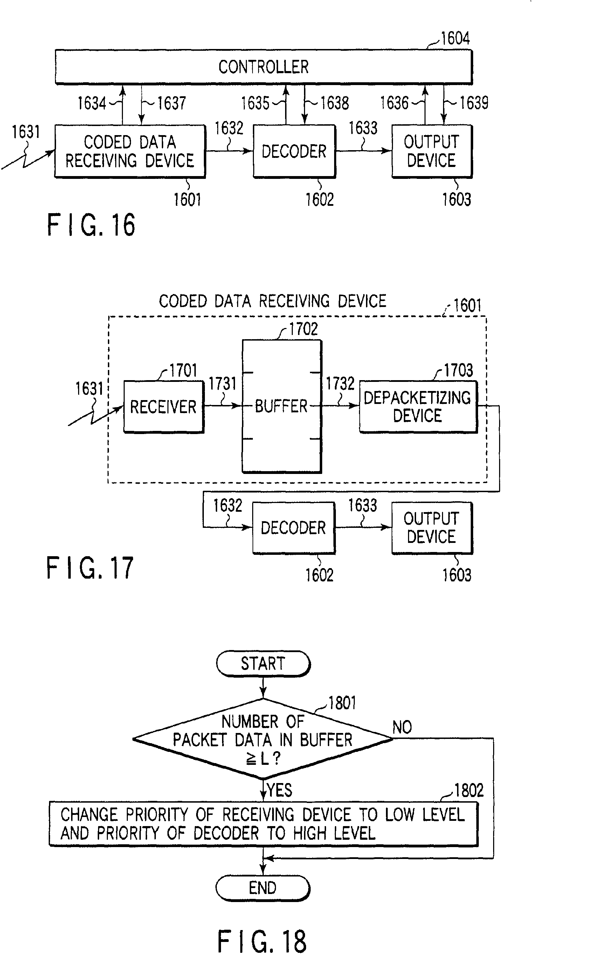

FIG. 16 is schematic block diagram of an image data receiving apparatus to which the technique of assigning priorities of the second embodiment is applied.

Referring to FIG. 16, encoded data 1631 from the transmitting side is received by an encoded data receiving device 1601 and input to a decoder 1602 as encoded data 1632. The decoder 1602 decodes the input encoded data 1632 and reproduces the image data 1633. The image data 1633 output from the decoder 1602 is input to an image output device 1603 so that it may be displayed on a display device and/or stored in a recording medium. At this time, the encoded data receiving device 1601, decoder 1602 and image output device 1603 input the respective pieces of load information 1634, 1635, 1636 on the volume of processed data and so on to a controller 1604. Then, the controller 1604 determines the priorities of the encoded data receiving device 1601, decoder 1602 and image output device 1603 on the basis of the pieces of the load information 1634, 1635, 1636 input to it. The pieces of priority information 1637, 1638, 1639 on the encoded data receiving device 1601, decoder 1602 and image output device 1603 produced by the controller 1604 are respectively output to the encoded data receiving device 1601, decoder 1602 and image output device 1603. Thus, the encoded data receiving device 1601, decoder 1602 and image output device 1603 operate respectively according to the pieces of priority information 1637, 1638, 1639 input to them.

The techniques of assigning priorities as described above for the image data transmitting apparatus may also be used for the image data receiving apparatus. Referring to FIG. 17, the encoded data receiving device 1601 temporarily stores the data packet received by the receiver 1701 in the buffer 1702 and the depacketizing device 1703 restores the original encoded data 1632 and outputs it to the decoder 1602. As a result, there may arise the problem of storing too much data to the buffer 1702 as in the case of the image date transmitter. Thus, the flow control operation as illustrated in FIG. 18 will be conducted for the image data receiving apparatus.

Referring to FIG. 18, firstly, the same priority is given to all of the encoded data receiving device 1601, decoder 1602 and image output device 1603 to start an operation. Assume that the volume of data (the number of packets) stored in the buffer 1702 is used as load information of the encoded data receiving device 1601 while the frame rate (fps) of the image to be decoded is used as load information of the decoder 1602 and the frame rate (fps) of the output is used as load information of the image output device 1603. Note, however, that it is safe to say that the load information 1635 and the priority 1638 of the decoder 1602 are used to control both the image decoder 1602 and the image output device 1603 because the frame rate of the image output device 1603 follows that of the decoder 1602. Therefore, the process of assigning priorities to the encoded data receiving device 1601 and the decoder 1602 will be described below.

Referring to FIG. 18, firstly in step 1801, it is determined whether the number of packets stored in the buffer 1702 exceeds the predetermined value L or not. If it exceeds the value of L, a lower priority is given to the encoded data receiving device 1601 while a higher priority is given to the decoder 1802 in step 1802 so that the volume of data to be written in the buffer 1702 of the encoded data receiving device 1601 is reduced while the volume of data to be read out from the buffer 1702 is increased in order to make buffer 1702 store less data. If, on the other hand, the number of packets stored in the buffer 1702 does not exceeds the value of L, the priorities are not changed (and held to the initial values). Therefore, in a system where it is not known which operating section has what load, this control technique can advantageously be used to assign suitable priorities to the related operating sections.

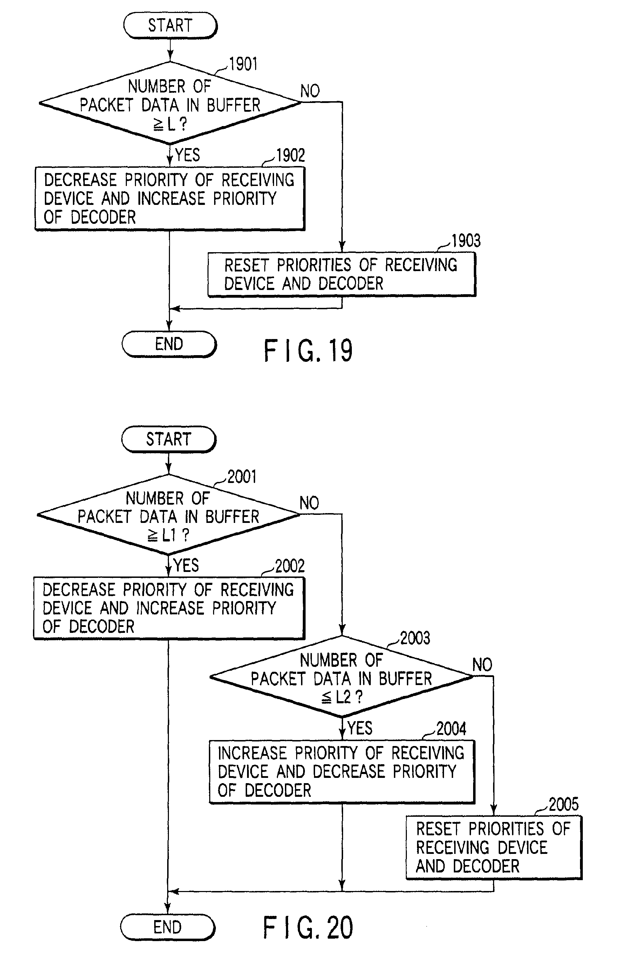

FIG. 19 is a flow chart of a second control technique that can be used for assigning priorities in the second embodiment of image data receiving apparatus according to the present invention which comprises a step for resetting the changed priorities to the initial values. Referring to FIG. 19, firstly in step 1901, it is determined whether the number of packets stored in the buffer 1702 exceeds the predetermined value L or not. If it exceeds the value of L, the priority of the encoded data receiving device 1601 is lowered by a predetermined degree while that of the decoder 1602 is raised by the predetermined degree in step 1902. If, on the other hand, the number of packets stored in the buffer 1702 does not exceeds the value of L, the priority of the encoded data receiving device 1601 and that of the decoder 1602 are reset to the respective initial values, which are equal to each other, in step 1903.

With this technique, it is possible to reduce the volume of data stored in the buffer 1702 by lowering the priority of the encoded data receiving device 1601 when the buffer 1702 stores too much data. When the buffer 1702 has much room for storing data, the frame rate may be raised to improve the image quality. This technique can effectively be used to a system where the load is not constant but varying if the processing operation of FIG. 19 is carried out periodically.

FIG. 20 is a flow chart of a third control technique that is obtained by modifying the second control technique of FIG. 19. Referring to FIG. 20, firstly in step 2001, it is determined whether the number of packets stored in the buffer 1702 exceeds the predetermined value L1 or not. If it is determined that the number of packets stored in the buffer 1702 exceeds the predetermined value L1, the priority of the encoded data receiving device 1601 is lowered while that of the decoder 1602 is raised in step 2002. If, on the other hand, it is determined in step 2001 that the number of packets stored in the buffer 1702 does not exceeds the predetermined level L1, the control operation proceeds to step 2003, where it is determined whether the number of packets stored in the buffer 1702 is not greater than L2 ($L2 \leqq L1$) or not. If it is not greater than L2, it is so judged that the buffer 1702 has now room and then, in step 2004, the priority of the encoded data receiving device 1601 is raised while that of the decoder 1602 is lowered.

However, it is not necessary to lower the priority of the decoder 1602. If, on the other hand, the number of packets stored in the buffer 1702 is greater than L2, it is so judged that the buffer 1702 does not have much room so that the priority of the encoded data receiving device 1601 and that of the decoder 1602 are made to reset to the respective initial values, which are equal to each other, in step 2005.

Thus, the priorities assigned to the encoded data receiving device 1601, decoder 1602 and image output device 1603 for carrying out the respective processing operations are controlled according to the volume of data stored in the buffer 1702 so that processing operations may be carried out in a well-balanced manner. Therefore, the frames are sampled for encoding at a substantial equal interval and the buffer 1702 is prevented from storing too much data so that the performance of the receiver for receiving images on a real time basis can be greatly improved.

When the rate of processing operation of each of the encoded data receiving device 1601, decoder 1602 and image output device 1603 is variable or when the system is realized on the basis of a microprocessor or by means of a computer program, the priority of the processing operation of each of the encoded data receiving device 1601, decoder 1602 and image output device 1603 can be controlled by appropriately allocating resources to them.

Thus, this system can optimize the performance of the system. Particularly, in the case of transmitting/ receiving images by means of software that is designed to be executed on a personal computer, the CPU can optimally assign processing operations to the respective components.

Third Embodiment

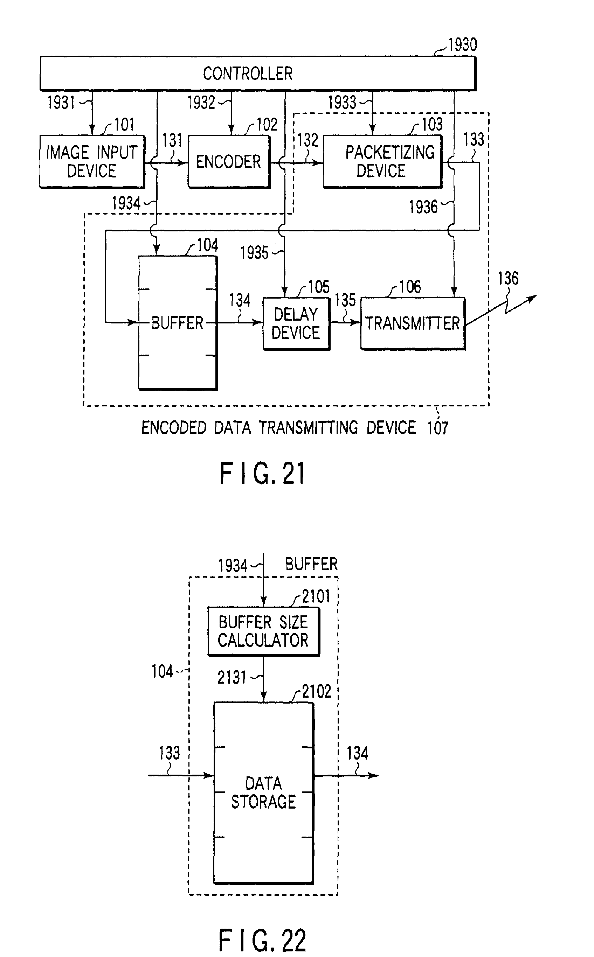

FIG. 21 is a schematic block diagram of the third embodiment of image data transmitting apparatus according to the present invention.

Referring to FIG. 21, the image data 131 input to the image input device 101 is encoded by the encoder 102. The encoded data 132 produced by the encoder 102 is then input to the packetizing device 103. The packetizing device 103 packetizes the encoded data 132 according to a predetermined method, adding header information thereto. The data packet 133 produced from the packetizing device 103 is then input to the buffer 104 and temporarily stored there. The data packet 134 output from the buffer 104 is then input to the delay device 105 and delayed by a period of time determined by the delay device 105. The data packet 135 delayed by the delay device 105 is then input to the transmitter 106 and transmitted by the latter to the receiving side.

The image input device 101, encoder 102, packetizing device 103, buffer 104, delay device 105 and transmitter 106 operate according to the respective pieces of control information 1931, 1932, 1933, 1934, 1935 and 1936 output from a controller 1930. FIG. 22 is a block diagram of the buffer 104.

Referring to FIG. 22, the buffer 104 comprises a buffer size calculator 2101 and a data storage 2102. The buffer size calculator 2101 computationally determines a suitable size as buffer volume on the basis of the control information 1934 including the image size and the packet size and notified by the controller 1930. The processing operations of the other components may be adversely affected when the buffer volume is too large, whereas the objective of buffer control of substantially equalizing the transmission intervals for transmitting data packets may not be achieved when the buffer volume is too small. The computed buffer size 2131 is input to the data storage 2102 and used to ensure data storage areas. Thereafter, the data packet 133 output from the packetizing device 103 is stored in the data storage 2102 and then the stored data packets 134 are sequentially output to the delay device 105.

The buffer size as used herein refers to the value indicating how many data packets the data storage can store. It will be expressed by Nb here. If the bit rate is BR (bps), the packet size is Sp (byte) and the maximum duration of storage in the buffer is T (sec), Number is obtained by equation (2) below;

$$Nb = (BR / Sp \times 8) \times T + \alpha \qquad (2)$$

where ▓ represents a value that gives the system a wide margin and can be arbitrarily selected.

For instance, if the image data transmitting device is realized by software that is executed on a computer, the data storage 2102 of the buffer 104 will be provided in the memory of the computer. Then, the device will use the memory only minimally when the feature of optimizing the buffer size is incorporated.

Now, the image receiving device will be described. Note that techniques similar to those described above for transmitting image data can be utilized for the operation of the image receiving device.

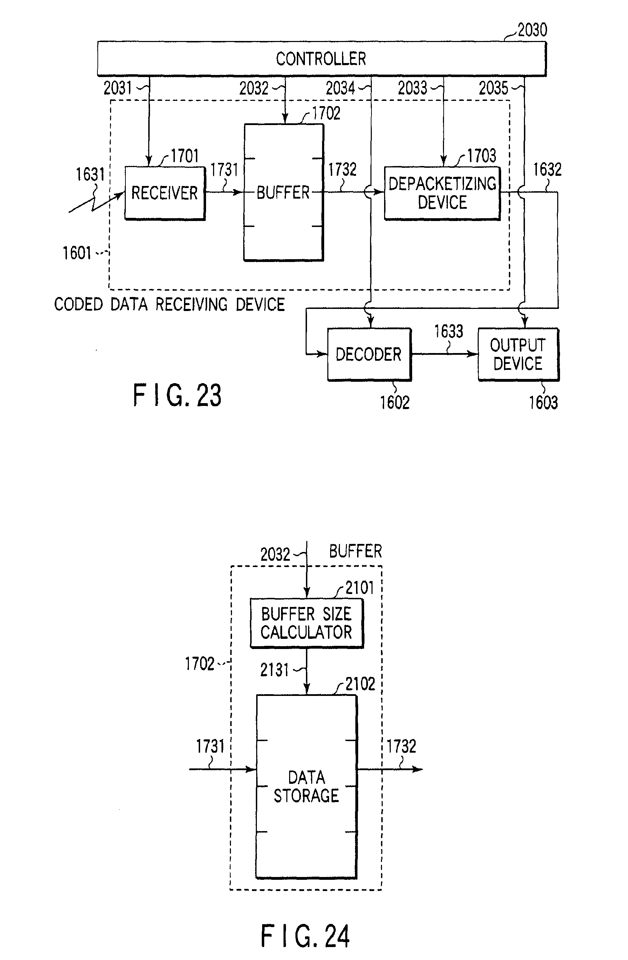

FIG. 23 is a schematic block diagram of an image data receiving apparatus to which the buffer size assigning method of the third embodiment is applied, showing its basic configuration.

The encoded data 1631 from the transmitting side is received by the encoded data receiving device 1601 and input to the decoder 1602 as encoded data 1632. The decoder 1602 decodes the input encoded data 1632 and reproduces the image data 1633. The image data 1633 output from the decoder 1602 is input to the image output device 1603 so that it may be displayed on a display device and/or stored in a recording medium. As shown in FIG. 23, the encoded data receiving device 1601 comprises a receiver 1701, buffer 1702 and depacketizing device 1703. The receiver 1701 receives the data 1631 sent from the transmitting side and outputs it. The buffer 1702 receives as input the received data 1731 output from the receiver 1701, temporarily stores it and then output it to the depacketizing device 1703. The depacketizing device 1703 restores the original encoded data 1632 out of the data packet 1732 output from the buffer 1702 and output it to the decoder 1602.

The receiving 1701, buffer 1702, depacketizing device 1703, decoder 1602 and image output device 1603 operate according to the respective pieces of control information 2031, 2032, 2033, 2034 and 2035 output from a controller 2030. FIG. 24 is a block diagram of the buffer 1702, which is similar to that of the image data transmitting apparatus.

Referring to FIG. 24, the buffer 1702 comprises a buffer size calculator 2101 and a data storage 2102. The buffer size calculator 2101 computationally determines a suitable size as buffer volume on the basis of the control information 2032 including the image size and the packet size and notified by the controller 2030. The computed buffer size 2131 is input to the data storage 2102 and used to ensure data storage areas. Thereafter, the data packet 1731 output from the receiver 1701 is stored in the data storage 2102 and then the stored data packets 1832 are sequentially output to the depacketizing device 1703.

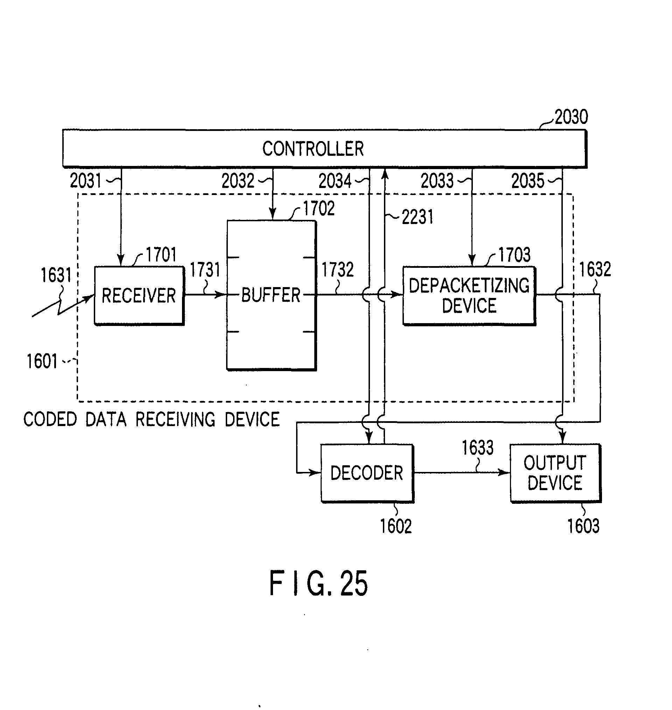

In the initial stages of a data receiving operation, the image size of the image being transmitted may not be clear. However, the encoded data of an image conforming to MPEG-4 contain therein information on the image size and so on. Therefore, it may be so arranged that the buffer size is left undefined in the initial stages until a beginning part of the data is received and the contents of the packets are analyzed to make it possible to define the buffer size. FIG. 25 is a schematic block diagram of an image data receiving apparatus realized by modifying the third embodiment to make it adapted to such a technique. The arrangement of FIG. 25 differs from that of FIG. 23 in that the decoder 1602 can notify the controller 2030 of data 2231 including the decoded image size and other pieces of information. As a result, the buffer 1702 firstly ensures storage areas by referring to the initial value of the buffer size and then redefines the storage areas of the buffer by decoding the data including the image size and referring to the decoded data.

Thus, the above described third embodiment makes it possible to effectively utilize the memory and other resources by adaptively modifying the buffer size to reflect the size (resolution) of the image to be transmitted. For instance, if the same buffer volume is provided for transmitting an NTSC TV size image (720 pixels $\times$ 468 pixels) and for transmitting a very small QCIF image (176 pixels $\times$ 144 pixels), some of the storage capacity of the buffer will be wasted when transmitting the QCIF image. Therefore, this technique will be particularly advantageous for operating a mobile phone or a PDA having a small memory capacity.

According to one aspect of the present invention, there is provided an image data transmitting apparatus comprising an image input device which receives image data as input, an encoder which encodes the image data input to the image input device, an encoded data transmitting device which packetizes the data encoded by the encoder and transmits the data packet, the encoded data transmitting device including a delay device which delays the timing of transmitting each data packet so as to transmit the data packets at intervals greater than a predetermined value.

Since the image transmitting apparatus comprises the delay device, it is possible to transmits the data packet at a predetermined interval by appropriately selecting the delay time of the delay device. Therefore, each of the data packets can be transmitted with a time interval greater than a predetermined value. Thus, it is possible to prevent the data packet from being transmitted at a very short interval in order to reduce the loss of data at the receiving side.

The encoded data transmitting device may include a packetizing device which packetizes the data encoded by the encoder, a buffer which temporarily stores the data packetized by the packetizing device, a delay device which delays the output of each of the data packets stored in the buffer and a transmitting device which transmits the data packet delayed by the delay device.

The delay time of the delay device may be so determined as to make each of the transmission time intervals of the data packet greater than a predetermined value on the basis of the minimal delay time that corresponds to each of the predetermined time intervals, the bandwidth of the network to be used for transmitting the data packets and the data size of the data packet. Then, it is possible to select a delay time that is suitable for the bandwidth of the network and ensure time intervals each of which corresponds at least to the minimum delay time even when the bandwidth of the network shows a very wide margin so that the problem of transmitting data packets continuously can be effectively avoided.

The encoded data transmitting device may be provided with a buffer which stores data encoded by the encoder. It may be also provided with a section configured to variably select priorities for the processing operations of the image input device, encoder and encoded data transmitting device according to the volume of data stored in the buffer. With this arrangement for controlling the priorities of the processing operations according to the volume of data stored in the buffer, it is possible to dissolve the problem of unequal sampling frames and improve the real time operation of image transmission by controlling the processing operations in such a way that the buffer does not store too much data. Particularly, when the system is realized on the basis of a microprocessor or by device of a computer program, the priorities of the processing operations can be realized with ease by appropriately allocating the system resources.

Additionally, only the necessary storage area will be used in the memory when the encoded data transmitting device is further provided with a buffer size calculating device which computationally determines the size of the buffer on the basis of the size of the image to be transmitted and a device which ensures the data storage area to be used as buffer on the basis of the size of the buffer as computationally determined by the buffer size calculating device.

While the present invention is described above by way of different embodiments thereof, any of the embodiments may be appropriately combined for the purpose of the present invention. Additionally, the functional features of image data transmitting/ receiving apparatus of any of the above described embodiments can be realized by device of a computer program. Therefore, any of the above described embodiments can be realized on an ordinary computer by storing the computer program in a computer-readable recording medium and causing the computer to read out the computer program from the recording medium and execute the program.

The present invention is by no means limited to the above described embodiments, which may be modified and/or altered appropriately without departing from the scope of the present invention. Additionally, since the above described embodiments realizes various aspects of the present invention, the present invention may be understood by extracting various aspects of the embodiments. For instance, if at least one of the problems that are solved by the present invention is dissolved and at least one of the advantages of the present invention is achieved when some of the components of any of the embodiments are omitted, the arrangement without the omitted components is found within the scope of the present invention.

**Claims**

1. An image data transmitting apparatus comprising:

   means (102) for encoding input image data; and
   transmitting means (107) for packetizing encoded data output from said encoding means and transmitting data packets, the transmitting means (107) **characterized by** comprising delay means (105) for controlling a transmission timing of each of the data packets thereby to transmit the data packets at intervals longer that a predetermined value.

2. The image data transmitting apparatus according to claim 1, **characterized in that** said delay means (105) controls the transmission timing based on a bandwidth of a network to be used for transmission of the data packets and a data size of the data packets.

3. The image data transmitting apparatus according to claim 1 or 2, **characterized in that** said transmitting means (107) comprises means (104) for storing the encoded data, the encoded data stored in said storing means (104) being transmitted, and said image transmitting apparatus **characterized by** further comprising:

means (1101) for varying priorities of operations of said encoding means (102) and said transmitting means (107) according to a volume of data stored in said storing means.

4. The image data transmitting apparatus according to claim 1, 2 or 3, **characterized in that** said transmitting means (107) comprises means (104) for storing the encoded data, the encoded data stored in said storing means being transmitted, and said image transmitting apparatus **characterized by** further comprising:

means (1930) for varying a data storage size of said storing means according to an image size of the input image data.

5. An image data receiving apparatus comprising:

means (1701) for receiving encoded image data;
means (1702) for storing the encoded image data received by said receiving means; and
means (1602) for decoding the encoded image data stored in said storing means, **characterized by** further comprising:

means (2030) for varying priorities of operations of said receiving means (1701) and said decoding means (1602) according to a volume of the image data stored in said storing means.

6. The image data receiving apparatus according to claim 5, **characterized by** further comprising:

means (2030) for varying a data storage size of said storing means according to a size of the encoded image data.

7. An image data transmitting method **characterized by** comprising:

encoding input image data; and
packetizing encoded data and transmitting data packets, a transmission timing of each of the data packets being controlled thereby transmitting the data packets at intervals longer that a predetermined value.

8. The image data transmitting method according to claim 7, **characterized in that** the transmission timing is controlled based on a bandwidth of a network to be used for transmission of the data packets and a data size of the data packets.

9. The image data transmitting method according to claim 7 or 8, **characterized in that** said transmitting comprises storing the encoded data, the stored encoded data being transmitted, and said method **characterized by** further comprising:

varying priorities of operations of said encoding and said transmitting according to a volume of stored data.

10. The image data transmitting method according to claim 7, 8 or 9, **characterized in that** said transmitting comprises storing the encoded data in storing means, the stored encoded data being transmitted, and said method **characterized by** further comprising:

varying a data storage size of said storing means according to an image size of the input image data.

11. An image data receiving method **characterized by** comprising:

receiving encoded image data;
storing the received image data in storing means;
decoding the stored image data; and
varying priorities of operations of said receiving and said decoding according to a volume of the stored image data.

12. The image data receiving method according to claim 11, **characterized by** further comprising:

varying a data storage size of said storing means according to a size of the encoded image data.

13. An image data transmitting apparatus comprising:

an encoder (102) configured to encode input image data; and
transmitter (107) configured to packetize encoded data output from said encoder and transmit data packets, the transmitter (107) **characterized by** comprising a delay device (105) configured to control a transmission timing of each of the data packets thereby to transmit the data packets at intervals longer that a predetermined value.

14. The image data transmitting apparatus according to claim 13, **characterized in that** said delay device (105) controls the transmission timing based on a bandwidth of a network to be used for transmission of the data packets and a data size of the data packets.

15. The image data transmitting apparatus according to claim 13 or 14, **characterized in that** said transmitter (107) comprises a storage (104) configured to store the encoded data, the encoded data stored in said storage (104) being transmitted, and said image transmitting apparatus **characterized by** further comprising:

   a controller (1101) configured to vary priorities of operations of said encoder (102) and said transmitter (107) according to a volume of data stored in said storage.

16. The image data transmitting apparatus according to claim 13, 14 or 15, **characterized in that** said transmitter (107) comprises a storage (104) configured to store the encoded data, the encoded data stored in said storage being transmitted, and said image transmitting apparatus **characterized by** further comprising:

   a controller (1930) configured to vary a data storage size of said storage according to an image size of the input image data.

17. An image data receiving apparatus comprising:

   a receiver (1701) configured to receive encoded image data;
   a storage (1702) configured to store the encoded image data received by said receiver; and
   a decoder (1602) configured to decode the encoded image data stored in said storage; **characterized by** further comprising:

   a controller (2030) configured to vary priorities of operations of said receiver (1701) and said decoder (1602) according to a volume of the image data stored in said storage.

18. The image data receiving apparatus according to claim 17, **characterized by** further comprising:

   a second controller (2030) configured to vary a data storage size of said storage according to a size of the encoded image data.

TRANSMITTER ... TIME

RECEIVER ... TIME

FAILURE    FAILURE

# FIG. 1

IMAGE INPUT DEVICE 101 → 131 → ENCODER 102 → 132 → PACKETIZING DEVICE 103

133

BUFFER 104 → 134 → DELAY DEVICE 105 → 135 → TRANSMITTER 106 → 136

ENCODED DATA TRANSMITTING DEVICE 107

# FIG. 2

DELAY DEVICE

FIG.3

FIG.4

$t_1$ INPUT IMAGE DATA

$t_2$ 010100011101000101101010111011011 CODED DATA

$t_3$
(a) 0101000111
(b) 010001
(c) 011010101110111
(d) 011
PACKET DATA

$t_4$ (a) 0101000111 TRANSMISSION

DELAY

$t_4+\triangle t$ (b) 010001 TRANSMISSION

DELAY

$t_4+2\times\triangle t$ (c) 011010101110111 TRANSMISSION

DELAY

$t_4+3\times\triangle t$ (d) 011 TRANSMISSION

FIG. 5

t1      INPUT IMAGE DATA

t2      0101000111010001011010101110111011      CODED DATA

t3      (a)   0101000111

(b)   010001            PACKET DATA

(c)   011010101110111

(d)   011

t4      (a)   0101000111   → TRANSMISSION

t4      (b)   010001   → TRANSMISSION

t4      (c)   011010101110111   → TRANSMISSION

t4      (d)   011   → TRANSMISSION

# F I G. 6

t₁    INPUT IMAGE DATA

↓

t₂    `010100011101000101101010110111011`    CODED DATA

↓

(a) `0101000111`
(b) `010001`
t₃                                          PACKET DATA
(c) `011010101110111`
(d) `011`

↓

$t_4 + \triangle t_a$    (a) `0101000111` ⟿ TRANSMISSION

↓ DELAY

$t_4 + \triangle t_a + \triangle t_b$    (b) `010001` ⟿ TRANSMISSION

↓ DELAY

$t_4 + \triangle t_a + \triangle t_b + \triangle t_c$    (c) `011010101110111` ⟿ TRANSMISSION

↓ DELAY

$t_4 + \triangle t_a + \triangle t_b + \triangle t_c + \triangle t_d$    (d) `011` ⟿ TRANSMISSION

# F I G. 7

ENCODED DATA TRANSMITTING DEVICE — 107

132 → BUFFER 104 — 731 → DELAY DEVICE 105 — 732 → PACKETIZING DEVICE 103 — 733 → TRANSMITTER 106 — 136

FIG. 8

ENCODED DATA TRANSMITTING DEVICE — 107

132 → BUFFER 104 — 731 → PACKETIZING DEVICE 103 — 831 → DELAY DEVICE 105 — 832 → TRANSMITTER 106 — 136

FIG. 9

ENCODED DATA TRANSMITTING DEVICE — 107

132 → PACKETIZING DEVICE 103 — 133 → BUFFER 104 — 134 → DELAY DEVICE 105 — 135 → TRANSMITTER 106 — 136

CODED DATA STORAGE DEVICE — 901

FIG. 10

ENCODED DATA TRANSMITTING DEVICE ⌐107

133　BUFFER　134　105 DELAY DEVICE　135　106 TRANSMITTER　136

104

1001
PACKET DATA STORAGE DEVICE

F I G. 11

1101
CONTROLLER

1131 ~ ~1134 1132 ~ ~1135 1133 ~ ~1135 136

IMAGE INPUT DEVICE　132　ENCODER　132　ENCODED DATA TRANSMITTING DEVICE

101　102　107

F I G. 12

START

NUMBER OF PACKET DATA IN BUFFER ≧ L ?　1301　NO

YES 　1302

CHANGE PRIORITY OF INPUT DEVICE TO LOW LEVEL AND PRIORITY OF TRANSMITTING DEVICE TO HIGH LEVEL

END

F I G. 13

START

1401

NUMBER OF
PACKET DATA IN BUFFER
≥ L ?

NO

YES    1402

DECREASE PRIORITY OF INPUT
DEVICE AND INCREASE PRIORITY
OF TRANSMITTING DEVICE

1403

RESET PRIORITIES OF INPUT
DEVICE AND TRANSMITTING DEVICE

END

F I G. 14

START

1501

NUMBER OF
PACKET DATA IN BUFFER
≥ L1 ?

NO

YES    1502

DECREASE PRIORITY OF INPUT
DEVICE AND INCREASE PRIORITY
OF TRANSMITTING DEVICE

1503

NUMBER OF
PACKET DATA IN BUFFER
≤ L2 ?

NO

YES    1504

INCREASE PRIORITY OF INPUT
DEVICE AND DECREASE PRIORITY
OF TRANSMITTING DEVICE

1505

RESET PRIORITIES OF
INPUT DEVICE AND
TRANSMITTING DEVICE

END

F I G. 15

CONTROLLER ~1604

1634 ~1637    1635 ~1638    1636 ~1639

1631

CODED DATA
RECEIVING DEVICE    1632    DECODER    1633    OUTPUT
DEVICE

1601    1602    1603

F I G. 16

CODED DATA RECEIVING DEVICE    ~1601

1631    RECEIVER    1731    BUFFER    1732    DEPACKETIZING
DEVICE
~1701    ~1702    ~1703

1632    DECODER    1633    OUTPUT
DEVICE

1602    1603

F I G. 17

START

↓

NUMBER OF
PACKET DATA IN BUFFER
≧ L ?    ~1801    NO

↓ YES

CHANGE PRIORITY OF RECEIVING DEVICE TO LOW LEVEL
AND PRIORITY OF DECODER TO HIGH LEVEL    ~1802

↓

END

F I G. 18

FIG. 19

FIG. 20

**FIG. 21**

**FIG. 22**

FIG. 23

FIG. 24

F I G. 25